# EUROPÄISCHE PATENTSCHRIFT

(11) **EP 3 142 823 B1**
(45) Veröffentlichungstag und Bekanntmachung des Hinweises auf die Patenterteilung: **29.07.2020**
(21) Anmeldenummer: 14723449.6
(22) Anmeldetag: 13.05.2014
(51) Int. Cl.: B23K 26/04

(54) **EINRICHTUNG ZUR ÜBERWACHUNG DER AUSRICHTUNG EINES LASERSTRAHLS UND EUV-STRAHLUNGSERZEUGUNGSVORRICHTUNG DAMIT**
DEVICE FOR MONITORING THE ORIENTATION OF A LASER BEAM AND EUV RADIATION-GENERATING DEVICE COMPRISING SAME
SYSTÈME DE CONTRÔLE DE L'ORIENTATION D'UN FAISCEAU LASER ET DISPOSITIF DE GÉNÉRATION D'UN RAYONNEMENT EUV ÉQUIPÉ DUDIT DISPOSITIF

(43) Veröffentlichungstag der Anmeldung: 22.03.2017
(73) Patentinhaber: Trumpf Laser- und Systemtechnik GmbH, 71254 Ditzingen (DE)
(72) Erfinder: LAMBERT, Martin, 71404 Korb (DE); ENZMANN, Andreas, 78052 Villingen-Schwenningen (DE)
(74) Vertreter: Kohler Schmid Möbus Patentanwälte
(86) Internationale Anmeldenummer: PCT/EP2014/059742
(87) Internationale Veröffentlichungsnummer: WO 2015/172816

(56) Entgegenhaltungen:
- EP-A2- 2 175 701
- DE-B4-102011 005 775
- GB-A- 2 226 132
- US-A- 4 626 649
- US-A- 4 694 136
- US-A- 4 793 715
- US-A1- 2002 108 939
- US-A1- 2011 140 008

## Beschreibung

Die vorliegende Erfindung betrifft eine Einrichtung zur Überwachung der Ausrichtung eines Laserstrahls, wobei US4793715 eine solche Einrichtung, gemäß dem Oberbegriff des Anspruchs 1, offenbart, und welche umfasst: einen Detektor mit einer Öffnung zum Durchtritt des Laserstrahls, mindestens zwei Temperatursensoren, die an dem Detektor angebracht sind, sowie eine Temperaturüberwachungseinrichtung, die mit den mindestens zwei Temperartursensoren verbunden ist, um die Ausrichtung des Laserstrahls relativ zu der Öffnung zu überwachen. Die Erfindung betrifft auch eine EUV-Strahlungserzeugungsvorrichtung mit mindestens einer solchen Einrichtung.

In der DE 10 2011 005 775 B4 der Anmelderin ist ein Detektor zum Erfassen einer Ausrichtung eines Laserstrahls bezüglich einer Achse eines vorbestimmten Strahlwegs des Laserstrahls in einer Laserbearbeitungsmaschine beschrieben. Der Detektor weist eine Mehrzahl von plattenförmigen Detektorelementen auf, die um die Achse herum angeordnet sind, um auftreffende Laserenergie zumindest teilweise in Wärme umzuwandeln. Die Detektorelemente weisen Aussparungen auf, die miteinander in einer Projektion in Richtung der Achse eine kreisförmige Öffnung zum Durchtritt des Laserstrahls bilden. Die Detektorelemente sind voneinander thermisch isoliert und können jeweils einen Temperatursensor aufweisen, der mit einer Temperatursensoreinrichtung verbunden ist, welche Temperaturdifferenzen zwischen den Detektorelementen ermittelt. Anhand der Temperaturdifferenzen kann die Ausrichtung des Laserstrahls erfasst und falls erforderlich korrigiert werden, so dass die Achse des Laserstrahls stets mit der Achse des Detektors zusammenfällt.

Es hat sich gezeigt, dass bei der Verwendung von Laserstrahlen mit hohen Laserleistungen und kurzen Pulsdauern der oben beschriebene Detektor gegebenenfalls zu träge reagiert, so dass die Temperatursensoren nicht rechtzeitig ansprechen, wenn es zu einer Fehlausrichtung des Laserstrahls relativ zur Öffnung kommt. Wird eine fehlerhafte Ausrichtung des Laserstrahls zu spät erkannt, kann es zu einer Beschädigung des Detektors durch den Laserstrahl kommen, beispielsweise indem dessen Material lokal aufgeschmolzen wird. Eine nicht erkannte fehlerhafte Ausrichtung des Laserstrahls kann auch zu einem Schaden an im Strahlengang nachfolgenden Bauteilen oder ggf. zu einer Schädigung von Personen bzw. Bedienern der Anlage führen, in welcher der Laserstrahl eingesetzt wird.

### Aufgabe der Erfindung

Der Erfindung liegt die Aufgabe zugrunde, eine Einrichtung zur Überwachung der Ausrichtung eines Laserstrahls sowie eine EUV-Strahlungserzeugungsvorrichtung mit mindestens einer solchen Einrichtung bereitzustellen, mit denen eine zuverlässige Überwachung der Ausrichtung eines Laserstrahls möglich ist.

### Gegenstand der Erfindung

Diese Aufgabe wird gelöst durch eine Einrichtung der eingangs genannten Art, bei der die mindestens zwei Temperatursensoren entweder einen mit zunehmender Temperatur zunehmenden oder einen mit zunehmender Temperatur abnehmenden temperaturabhängigen Widerstand aufweisen und bei der die mindestens zwei Temperatursensoren mit der Temperaturüberwachungseinrichtung in einer Reihenschaltung verbunden sind. Im Sinne dieser Anmeldung wird unter einem Laserstrahl allgemein ein Hochenergiestrahl verstanden, d.h. beispielsweise auch ein Plasmastrahl, dessen Ausrichtung ebenfalls auf die oben beschriebene Weise überwacht werden kann.

Die mindestens zwei, typischer Weise drei, vier oder mehr Temperatursensoren des Detektors sind in einer Reihenschaltung miteinander verbunden und alle der in der Reihenschaltung verbundenen Temperatursensoren weisen einen Widerstand auf, dessen Abhängigkeit von der Temperatur positiv ("positive temperature coefficient", PTC, Kaltleiter) oder negativ ist ("negative temperature coefficient", NTS, Heißleiter). Ein durch den Laserstrahl erzeugter Wärmeeintrag in den Detektor führt an einem jeweiligen Temperatursensor daher jeweils entweder zu einer Erhöhung oder zu einer Verringerung des Widerstandes. Diese Erhöhung oder Verringerung des Widerstandes wird aufgrund der Reihenschaltung in Summe gemessen, so dass sich die Sensitivität des Detektors bzw. der Einrichtung auf plötzliche Temperaturanstiege deutlich erhöht. Die Temperaturüberwachungseinrichtung kann eine Schaltungsanordnung bzw. einen Schaltkreis enthalten oder als Schaltungsanordnung bzw. als Schaltkreis ausgebildet sein, die mit den in Reihe geschalteten Temperatursensoren in elektrisch leitender Verbindung steht.

Für die vorliegende Anwendung ist es ausreichend, wenn die Temperaturüberwachungseinrichtung ein binäres Signal erzeugt, d.h. wenn die Temperaturüberwachungseinrichtung das Überschreiten eines vorgegebenen Temperatur-Schwellwerts anzeigt, der einen Übergang zwischen "Temperatur in Ordnung" und "Temperatur nicht in Ordnung" darstellt. Es hat sich gezeigt, dass herkömmliche Temperaturschalter an dem Detektor, die diese Funktion übernehmen sollen, nicht schnell genug ansprechen. Durch die Reihenschaltung der Temperatursensoren spielt der Ort in Umfangsrichtung, an dem der Laserstrahl auf den Detektor trifft, für die Detektion des Temperaturanstiegs keine Rolle und die Sensitivität der Detektion wird durch die Reihenschaltung erhöht.

Ist der Laserstrahl nicht fehlerhaft ausgerichtet, fällt die Richtung der Strahlachse des Laserstrahls mit der Achse des Detektors zusammen, die zentral durch die Öffnung des Detektors verläuft. Der Detektor bzw. die Öffnung des Detektors kann eine Blende bzw. eine Apertur für den Laserstrahl bilden, so dass auch bei korrekter Ausrichtung ein geringer Anteil der Laserstrahlung auf den Bereich des Umfangs der Öffnung trifft und von dem Detektor bzw. von der Blende abgeschirmt wird. In diesem Fall ist der Gesamtwiderstand der in Reihe geschalteten Temperatursensoren jedoch gering. Der Gesamtwiderstand nimmt aber bei einer Fehlausrichtung des Laserstrahls, bei dem dieser zur Achse des Detektors versetzt oder verkippt ist, deutlich zu, da dies mit einem erhöhten Wärmeeintrag in den Detektor verbunden ist.

Bei einer Ausführungsform sind die Temperatursensoren als PTC-Widerstände ausgebildet. Derartige auch als Kaltleiter bezeichnete Temperatursensoren weisen eine hohe Sensitivität für schnelle Temperaturanstiege auf und sind daher für die vorliegende Anwendung besonders geeignet. Ein weiterer Vorteil bei der Verwendung von PTC-Widerständen besteht darin, dass eine Unterbrechung der Reihenschaltung bzw. ein Durchbrennen eines PTC-Widerstands zu einem plötzlichen Anstieg des von der Temperaturüberwachungseinrichtung gemessenen Widerstands führt und somit zu demselben Resultat wie bei einem Temperaturanstieg des Detektors. Da der Widerstand bei einer Unterbrechung praktisch unendlich groß wird und somit größer als die bei einem Wärmeeintrag zu erwartende Zunahme des Widerstands der Temperatursensoren, kann die Temperaturüberwachungseinrichtung auch dazu verwendet werden, einen Fehlerfall in Form eines durchgebrannten Stromkreises bzw. eines PTC-Widerstands zu erkennen. Es versteht sich, dass alternativ auch NTC-Widerstände oder andere Bauelemente mit stark temperaturabhängigem Widerstand als Temperatursensoren verwendet werden können. Da die Änderung des Widerstands proportional zur auf den Detektor einfallenden Leistung des Laserstrahls ist, kann anhand der Veränderung des Widerstands auch der Energieeintrag in den Detektor bestimmt werden.

Bei einer weiteren Ausführungsform weist der Detektor einen die Öffnung ringförmig umschließenden Grundkörper auf, in den die Temperatursensoren integriert sind. Im Sinne dieser Anmeldung wird unter einer Integration der Temperatursensoren auch eine Anbringung an einer Außenseite des Grundkörpers verstanden, sofern die Temperatursensoren mit diesem in flächigem Kontakt stehen. Durch die Integration der Temperatursensoren in den Grundkörper wird ein schnelles Ansprechen der Temperatursensoren ermöglicht. Der Grundkörper ist bevorzugt einteilig ausgebildet und weist Öffnungen bzw. Bohrungen zur Aufnahme der Temperatursensoren auf. Gegebenenfalls kann der Grundkörper auch mehrteilig ausgebildet sein.

Bei einer vorteilhaften Weiterbildung ist der Grundkörper aus Metall, insbesondere aus Kupfer, oder aus einem anderen Material gebildet, welches einen besonders hohen Wärmeleitwert aufweist, beispielsweise Siliziumcarbid Si/SiC ggf. mit Kohlenstoffbeimischung (Diamant). Durch den hohe Wärmeleitwert bzw. den geringen Wärmewiderstand des Grundkörpers kann die Wärme, die von dem Laserstrahl in den Detektor eingebracht wird, schnell den Temperatursensoren zugeführt werden. Zusätzlich zur Wärmeleitung erfüllt der Grundkörper in der Regel die weitere Aufgabe, die Kante der Öffnung zu bilden, durch die der Laserstrahl tritt. Um zu verhindern, dass der Grundkörper beim Kontakt mit dem Laserstrahl sofort schmilzt, ist es erforderlich, dass der Grundkörper aus einem wärmebeständigen Material besteht, was für die oben beschriebenen Materialien, insbesondere für Kupfer und Si/SiC, zutrifft.

Bei einer Weiterbildung ist an dem Grundkörper ein Absorber angebracht, und zwar typischer Weise an derjenigen Seide des Grundkörpers, an welcher der Laserstrahl auf diesen bzw. auf den Detektor auftrifft. Bei dem Absorber kann es sich beispielsweise um einen Einsatz handeln, der mit dem Grundkörper in flächige Anlage gebracht ist, beispielsweise indem dar Absorber in den Grundkörper eingelegt bzw. eingepresst ist. Bei dem Absorbermaterial des Absorbers kann es sich beispielsweise um hart anodisiertes Aluminium oder ein anderes Material mit hoher Absorption für Strahlung bei der Wellenlänge des Laserstrahls handeln. Das Absorbermaterial absorbiert die Wärme des auftreffenden Laserstrahls, die über den Grundkörper abgeführt wird.

Bei einer weiteren Weiterbildung weist der Detektor einen Kühlkörper auf, der mit dem ringförmigen Grundkörper über eine Wärmebrücke in Verbindung steht. Der typischer Weise plattenförmige Grundkörper steht mit dem Kühlkörper in Verbindung bzw. ist an diesem befestigt. Bevorzugt steht der Kühlkörper mit dem ringförmigen Grundkörper nur über eine Wärmebrücke, d.h. über einen beispielsweise umlaufenden Steg, in thermisch leitender Verbindung. Der Kühlkörper ist ansonsten gegenüber dem Grundkörper thermisch isoliert, d.h. dieser liegt nicht an dem Grundkörper an bzw. zwischen dem Grundkörper und dem Kühlkörper ist ein Spalt gebildet, der nur von der Wärmebrücke überbrückt wird. Die Wärmebrücke bzw. die stegförmige Verbindung ermöglicht es, im Normalbetrieb, d.h. bei korrekt ausgerichtetem Laserstrahl, die in den als Blende wirkenden Detektor eingebrachte vergleichsweise geringe Wärmeleistung abzuführen. Trifft ein nicht korrekt justierter Laserstrahl auf den Grundkörper, erwärmt sich dieser und die an diesem angebrachten Temperatursensoren schnell, da der zusätzliche Wärmeeintrag nicht schnell genug über die Wärmebrücke abgeführt werden kann. Durch die Wärmebrücke kann somit die Sensitivität der Einrichtung zur Detektion einer fehlerhaften Ausrichtung des Laserstrahls gesteigert werden.

Bei einer vorteilhaften Weiterbildung weist der Kühlkörper mindestens einen Kühlkanal für den Durchfluss eines Kühlmediums auf. Es ist günstig, das Kühlmedium nicht durch den Grundkörper selbst zu leiten, um zu verhindern, dass bei einem ggf. erfolgenden Aufschmelzen des Materials des Grundkörpers das Kühlmedium, z.B. in Form von Kühlwasser, aus dem Kühlkanal in den Strahlengang des Laserstrahls oder in die Umgebung gelangen kann.

Bei einer weiteren Ausführungsform sind die Temperatursensoren gleichmäßig über den Umfang der Öffnung verteilt. In diesem Fall sind die Winkel, welche benachbarte Temperatursensoren in Umfangsrichtung der Öffnung miteinander einschließen, gleich groß, d.h. für den jeweiligen Winkel zwischen zwei Temperatursensoren gilt: 360° / n, wobei n die Anzahl der Temperatursensoren bezeichnet. Eine solche gleichmäßige bzw. regelmäßige Anordnung der Temperatursensoren ist günstig, da auf diese Weise unabhängig von der Position in Umfangsrichtung, an welcher der Laserstrahl bei einer Dejustage auf den Detektor trifft, typischer Weise stets ein Temperatursensor in der Nähe angeordnet ist.

Bei einer Ausführungsform weist die Temperaturüberwachungseinrichtung mindestens ein Schaltelement auf, welches ausgebildet ist, beim Überschreiten einer vorgegebenen Schaltschwelle, die einem Temperatur-Schwellwert oder ggf. einem Schwellwert der zeitlichen Änderung der Temperatur zugeordnet ist, von einem ersten in einen zweiten Schaltzustand umzuschalten. Das Schaltelement schaltet beim Überschreiten der Schaltschwelle, die z.B. einem vorgegebenen Spannungsabfall an dem Schaltelement entsprechen kann, von dem ersten Schaltzustand (z.B. "Temperatur in Ordnung") in den zweiten Schaltzustand (z.B. "Temperatur nicht in Ordnung"). Der Spannungsabfall an dem Schaltelement wird typischer Weise vom Gesamtwiderstand der Temperatursensoren beeinflusst. An Stelle eines Schwellwerts der Temperatur kann ggf. auch eine zeitliche Änderung der Temperatur, d.h. ein Temperaturgradient, als Schaltschwelle dienen, bei der von einem ersten in einen zweiten Schaltzustand umgeschaltet wird. Gegebenenfalls kann beim Überschreiten der Schaltschwelle die den Laser erzeugende Laserquelle automatisch abgeschaltet werden.

Bei einer Weiterbildung dieser Ausführungsform weist die Temperaturüberwachungseinrichtung ein erstes Schaltelement und ein zweites Schaltelement auf, die ausgebildet sind, beim Überschreiten von unterschiedlichen Schaltschwellen, die unterschiedlichen Temperatur-Schwellwerten zugeordnet sind, von einem ersten in einen zweiten Schaltzustand umzuschalten. In diesem Fall kann beim Überschreiten einer ersten Schaltschwelle, die bei einer ersten, geringeren Temperatur überschritten wird, eine Warnung z.B. an einen Bediener ausgegeben werden, bevor beim Überschreiten der zweiten Schaltschwelle eine Gegenmaßnahme eingeleitet wird, die insbesondere darin bestehen kann, die den Laserstrahl erzeugende Laserquelle abzuschalten. Das erste und das zweite Schaltelement können insbesondere zueinander parallel geschaltet sein.

Bei einer weiteren Ausführungsform ist das mindestens eine Schaltelement als Zener-Diode ausgebildet. Eine Zener-Diode sperrt den Durchgang bzw. einen Stromfluss, wenn eine Schaltschwelle in Form einer Durchbruchspannung erreicht bzw. unterschritten wird, die vom Typ der verwendeten Zener-Diode abhängig ist und die beispielsweise bei 2,7 V, 5,6 V oder 8,2 V liegen kann. Wird ein Schaltelement in Form einer Zener-Diode zu mehreren Temperatursensoren in Form von PTC-Widerständen in Reihe geschaltet, erhöht sich die an den Temperatursensoren abfallende Spannung mit zunehmender Temperatur, wodurch bei gegebener Versorgungsspannung die an der Zener-Diode abfallende Spannung abnimmt. Fällt die an der Zener-Diode abfallende Spannung unter die Durchbruchspannung ab, sperrt die Zener-Diode den Stromfluss, so dass der entsprechende Zweig der Schaltungsanordnung unterbrochen wird. Werden zwei Zener-Dioden mit unterschiedlichen Durchbruchspannungen in der Schaltungsanordnung der Temperaturüberwachungseinrichtung parallel geschaltet, kann eine erste Zener-Diode mit größerer Durchbruchspannung dazu dienen, bei einer ersten Temperatur des Detektors bzw. der Temperatursensoren umzuschalten und beispielsweise eine Warnung ausgeben und die zweite Zener-Diode mit der geringeren Durchbruchspannung kann dazu dienen, bei einer zweiten, größeren Temperatur umzuschalten und dem Bediener anzeigen, dass eine Gegenmaßnahme eingeleitet werden muss, beispielsweise indem die Laserquelle zur Erzeugung des Laserstrahls abgeschaltet wird. Es versteht sich, dass auch andere elektronische Schaltelemente als Zener-Dioden in der Temperaturüberwachungseinrichtung verwendet werden können, beispielsweise Relais oder dergleichen.

Bei einer weiteren Ausführungsform umfasst die Temperaturüberwachungseinrichtung eine Einrichtung zur Einstellung des mindestens einen Temperatur-Schwellwerts, welcher der mindestens einen Schaltschwelle zugeordnet ist. Wie weiter oben beschrieben wurde, ist bei der Verwendung eines Schaltelements beispielsweise in Form einer Zener-Diode die Durchbruchspannung vom verwendeten Diodentyp abhängig und somit fest vorgegeben. Um dennoch den Temperatur-Schwellwert variieren zu können, bei dem der Schalter in Form der Zener-Diode umschaltet, kann ein einstellbarer Spannungsteiler, z.B. in Form eines Potentiometers, genutzt werden. Das Potentiometer ist typischer Weise zu den Temperatursensoren in Reihe geschaltet, so dass der (einstellbare) Widerstand und damit die Spannung, die an dem Potentiometer abfällt, zu der Spannung addiert wird, die an den Temperatursensoren abfällt. Die an der Zener-Diode abfallende Spannung und somit auch der Temperatur-Schwellwert, bei dem die Zener-Diode umschaltet, verändern sich entsprechend.

Bei einer weiteren Ausführungsform ist die mindestens eine Schalteinrichtung zu den Temperatursensoren in Reihe geschaltet. Auf diese Weise sinkt oder steigt die an der Schalteinrichtung abfallende Spannung direkt (bzw. proportional) mit dem in Abhängigkeit von der Temperatur steigenden oder fallenden Widerstand der Temperatursensoren. Wird an die Reihenschaltung der Temperatursensoren und des Schaltelements eine konstante Versorgungsspannung angelegt und die Reihenschaltung der Temperatursensoren z.B. wegen eines durchgebrannten Temperatursensors unterbrochen, sinkt die an dem Schaltelement abfallende Spannung unmittelbar auf 0 V, so dass auch dieser Fehlerfall erkannt wird, wodurch die Sicherheit der Temperaturüberwachung weiter erhöht wird.

Ein weiterer Aspekt der Erfindung betrifft eine EUV-Strahlungserzeugungsvorrichtung, umfassend: eine Vakuum-Kammer mit einer Vakuum-Umgebung, in der zur Erzeugung von EUV-Strahlung ein Target-Material in einem Zielbereich anordenbar ist, eine Strahlführungseinrichtung zur Führung eines Laserstrahls in den Zielbereich, sowie mindestens eine Einrichtung wie weiter oben beschrieben zur Überwachung der Ausrichtung des von der Strahlführungseinrichtung geführten Laserstrahls. Der Detektor der Einrichtung, genauer gesagt die Öffnung, durch die der Laserstrahl tritt, kann insbesondere als in der Strahlführungseinrichtung angeordnete Blende dienen. Die Ausrichtung des Laserstrahls in der Blendenöffnung bzw. die Temperatur des als Blende dienenden Detektors können überwacht werden, um eine Beschädigung der Blende und/oder von weiteren in der Strahlführung nach der Blende angeordneten Bauelementen zu verhindern. Es versteht sich, dass die weiter oben beschriebene Einrichtung nicht nur in einer EUV-Strahlungserzeugungsvorrichtung vorteilhaft eingesetzt werden kann, sondern auch in anderen Vorrichtungen, z.B. in Laserbearbeitungsmaschinen oder dergleichen, insbesondere, wenn dort ein gepulster Laserstrahl mit hoher Laserleistung eingesetzt wird.

Bei einer Ausführungsform umfasst die EUV-Strahlungserzeugungsvorrichtung eine Laserstrahl-Erzeugungseinrichtung zur Erzeugung des Laserstrahls und die Einrichtung ist ausgebildet, die Laserstrahl-Erzeugungseinrichtung beim Überschreiten eines Temperatur-Schwellwerts abzuschalten. Wie weiter oben beschrieben wurde, ist es beim Überschreiten eines vorgegebenen Temperatur-Schwellwerts, der beispielsweise bei 50°C liegen kann, vorteilhaft, die Laserquelle abzuschalten, um eine Beschädigung des Detektors bzw. der Blende und/oder von weiteren Bauelementen der EUV-Strahlungserzeugungsvorrichtung zu verhindern. Zu diesem Zweck kann von der Einrichtung zur Überwachung der Ausrichtung des Laserstrahls ein typischer Weise elektrisches Signal an die Laserstrahl-Erzeugungseinrichtung übermittelt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer EUV-Strahlungserzeugungsvorrichtung mit einem als Blende wirkenden Detektor, durch den ein Laserstrahl hindurch tritt und an dem Temperatursensoren angebracht sind,
- Fig. 2: ein Schaltbild einer Temperaturüberwachungseinrichtung zur Überwachung der Temperatur des in Fig. 1 gezeigten Detektors, und
- Fig. 3: eine Detaildarstellung eines Ausführungsbeispiels des Detektors von Fig. 1.

In der folgenden Beschreibung der Zeichnungen werden für gleiche bzw. funktionsgleiche Bauteile identische Bezugszeichen verwendet.

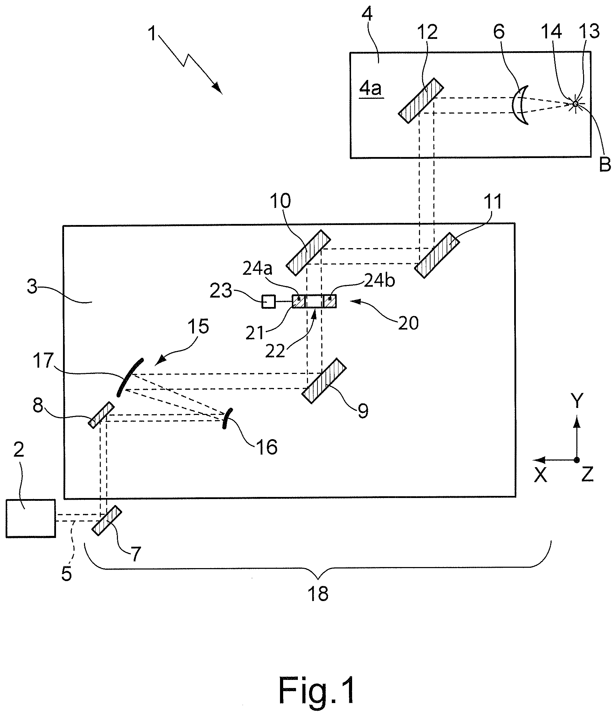

**Fig. 1** zeigt eine EUV-Strahlungserzeugungsvorrichtung 1, welche eine Laserstrahl-Erzeugungseinrichtung 2 (auch Treiberlasereinrichtung genannt), eine Strahlführungs-Kammer 3 sowie eine Vakuum-Kammer 4 aufweist. In einer in der Vakuum-Kammer 4 gebildeten Vakuum-Umgebung 4a ist eine Fokussiereinrichtung in Form einer Fokussierlinse 6 angeordnet, um einen CO₂-Laserstrahl 5 in einem Zielbereich B zu fokussieren. Die in Fig. 1 gezeigte EUV-Strahlungserzeugungsvorrichtung 1 entspricht im Wesentlichen dem Aufbau, wie er in der US 2011/0140008 A1 beschrieben ist, welche bezüglich dieses Aspekts durch Bezugnahme zum Inhalt dieser Anmeldung gemacht wird.

Die Laserstrahl-Erzeugungseinrichtung 2 umfasst eine CO₂-Strahlquelle sowie mehrere Verstärker zur Erzeugung eines Laserstrahls 5 mit hoher Strahlungsleistung (> 1 kW). Für eine detaillierte Beschreibung von Beispielen von möglichen Ausgestaltungen der Laserstrahl-Erzeugungseinrichtung 2 sei auf die US 2011/0140008 A1 verwiesen. Von der Laserstrahl-Erzeugungseinrichtung 2 wird der Laserstrahl 5 über einer Mehrzahl von Umlenkspiegeln 7 bis 11 der Strahlführungs-Kammer 3 sowie eines weiteren Umlenkspiegels 12 in der Vakuum-Kammer 4 auf die Fokussierlinse 6 umgelenkt, welche den Laserstrahl 5 in dem Zielbereich B fokussiert, an dem Zinn als Target-Material 13 angeordnet ist.

Das Target-Material 13 wird von dem fokussierten Laserstrahl 5 getroffen und hierbei in einen Plasma-Zustand übergeführt, der zur Erzeugung von EUV-Strahlung 14 dient. Das Target-Material wird dem Zielbereich B mit Hilfe einer (nicht gezeigten) Bereitstellungseinrichtung zugeführt, welche das Target-Material entlang eines vorgegebenen Pfades führt, der den Zielbereich B kreuzt. Für Details der Bereitstellung des Target-Materials sei ebenfalls auf die US 2011/0140008 A1 verwiesen.

In einem Strahlführungs-Raum der Strahlführungs-Kammer 3 ist eine Einrichtung 15 zur Vergrößerung des Strahldurchmessers des Laserstrahls 5 vorgesehen, welche einen ersten Off-Axis Parabolspiegel 16 mit einer ersten, konvex gekrümmten reflektierenden Oberfläche und einen zweiten Off-Axis Parabolspiegel 17 mit einer zweiten, konkav gekrümmten reflektierenden Oberfläche aufweist. Die reflektierenden Oberflächen eines Off-Axis Parabolspiegels 16, 17 bilden jeweils die Off-Axis Segmente eines (elliptischen) Paraboloids. Der Begriff "Off-Axis" bedeutet, dass die reflektierenden Oberflächen nicht die Rotationsachse des Paraboloids (und damit auch nicht den Scheitelpunkt des Paraboloids) enthalten.

Die optischen Elemente 7 bis 11, 16, 17, 12, 6 bilden gemeinsam eine Strahlführungseinrichtung 18 zur Führung des Laserstrahls 5 in den Zielbereich B. Zur Überwachung des Strahlengangs des Laserstrahls 5 ist in dem Strahlführungs-Raum der Strahlführungskammer 3 eine Einrichtung 20 zur Überwachung der Ausrichtung des Laserstrahls 5 angeordnet, welche einen Detektor 21 mit einer Öffnung 22 zum Durchtritt des Laserstrahls 5 sowie eine Temperaturüberwachungseinrichtung 23 umfasst. In den Detektor 21 sind im gezeigten Beispiel vier Temperatursensoren 24a-d integriert, von denen in Fig. 1 zwei gezeigt sind. Die Temperatursensoren 24a-d stehen mit der Temperaturüberwachungseinrichtung 23 in elektrischer Verbindung, um die Ausrichtung des Laserstrahls 5 relativ zu der Öffnung 22 zu überwachen. Hierbei wird ausgenutzt, dass die vier Temperatursensoren 24a-d als PTC-Widerstände, beispielsweise als PT100 oder PT500, ausgebildet sind und daher einen mit zunehmender Temperatur zunehmenden temperaturabhängigen Widerstand aufweisen.

Bei einer korrekten Ausrichtung des Laserstrahls 5 fällt die Laserstrahlachse mit der zentralen Achse bzw. dem Mittelpunkt der kreisförmigen Öffnung 22 zusammen, so dass der Laserstrahl 5 nur in einem schmalen Randbereich mit geringer Strahlungsleistung auf den als Blende wirkenden Detektor 21 trifft. Ist der Laserstrahl 5 hingegen dejustiert, d.h. zur zentralen Achse des Detektors 21 verkippt oder verschoben, nimmt der Anteil der Strahlungsleistung, die auf den Detektor 21 trifft, zu. Je stärker die Fehlausrichtung, desto mehr steigt die Temperatur des Detektors 21, so dass anhand der mittels der Temperatursensoren 24a-d überwachten Temperatur des Detektors 21 die Ausrichtung des Laserstrahls 5 überwacht werden kann.

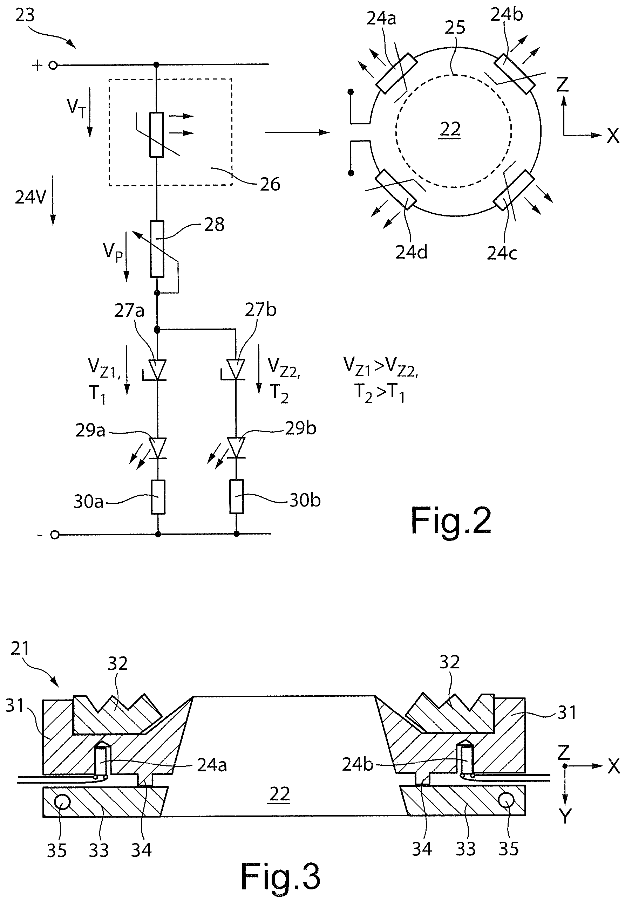

Wie in **Fig. 2** gezeigt ist, welche ein Schaltbild der Temperaturüberwachungseinrichtung 23 sowie der Temperatursensoren 24a-d zeigt, sind die vier Temperatursensoren 24a-d in Reihe geschaltet, um den Temperaturanstieg des Detektors 21 möglichst schnell detektieren zu können. Wie in Fig. 2 ebenfalls zu erkennen ist, sind die Temperatursensoren 24a-d entlang des Umfangs der Öffnung 22 gleichmäßig verteilt, d.h. benachbarte Temperatursensoren 24a-d sind in Umfangsrichtung jeweils unter einem Winkel von 90° zueinander ausgerichtet. Im gezeigten Beispiel weisen die Temperatursensoren 24a-d bei Raumtemperatur jeweils einen Widerstand von ca. 500 KΩ auf, so dass der Gesamtwiderstand 26 der in Fig. 2 rechts dargestellten Reihenschaltung der Temperatursensoren 24a-d bei Raumtemperatur bei ca. 2MΩ liegt.

Die Temperatursensoren 24a-d bzw. deren Gesamt- bzw. Ersatzwiderstand 26 ist in der Temperaturüberwachungseinrichtung 23 zu einer Parallelschaltung aus zwei Schaltelementen in Form von Zener-Dioden 27a, 27b in Reihe geschaltet. In einem jeweiligen Zweig ist jeweils eine LED 29a, 29b sowie ein geeignet dimensionierter Vorwiderstand 30a, 30b zu der Zener-Diode 27a, 27b in Reihe geschaltet. Zu den Temperatursensoren 24a-d ist ein Potentiometer in Reihe geschaltet, welches als Einrichtung 28 zur Änderung von Temperatur-Schwellwerten T₁, T₂ dient, wie weiter unten näher beschrieben wird.

Bei korrekter Ausrichtung des Laserstrahls 5 erwärmt sich der Detektor 21 nur unwesentlich, d.h. die Temperatur des Detektors 21 ist nur geringfügig größer als die Raumtemperatur. Die Temperaturüberwachungseinrichtung 23 wird mit einer konstanten Spannung von 24 V betrieben und die Vorwiderstände 24a-d sind derart auf die Widerstandswerte der Temperatursensoren 24a-d abgestimmt, dass bei korrekter Ausrichtung des Laserstrahls 5 an den beiden LEDs 29a, 29b eine ausreichend große Spannung abfällt, um diese zum Leuchten zu bringen. Anhand der beiden aktiven LEDs 29a, 29b kann ein Bediener die korrekte Ausrichtung des Laserstahls 5 erkennen.

Steigt die Temperatur des Detektors 21, erwärmen sich die Temperatursensoren 24a-d und deren Widerstand nimmt zu. Entsprechend nimmt auch die an dem Gesamt- bzw. Ersatzwiderstand 26 abfallende Spannung V_{T} zu. Wird die an den Temperatursensoren 24a-d abfallende Spannung V_{T} durch die Erhöhung der Temperatur des Detektors 21 zu groß, so sinkt die an den beiden als Schaltelementen 27a, 27b dienenden Zener-Dioden abfallende Spannung. Fällt die Spannung an den Zener-Dioden 27a, 27b unter die Durchbruchspannung V_{Z1}, V_{Z2}, die im gezeigten Beispiel bei der ersten Zener-Diode 27a bei V_{Z1} = 5,6 V und bei der zweiten Zener-Diode 27b bei V_{Z2} = 2,7 V liegt, sperrt die jeweilige Zener-Diode 27a, 27b, d.h. der entsprechende Zweig des Schaltkreises ist offen, so dass an der zugehörigen LED 29a, 29b keine Spannung mehr abfällt und diese nicht mehr leuchtet.

Wie weiter oben beschrieben wurde, sind im gezeigten Beispiel die Durchbruchsspannungen V_{Z1}, V_{Z2} der beiden Zener-Dioden 27a, 27b unterschiedlich groß, so dass diese bei unterschiedlichen Temperatur-Schwellwerten T₁, T₂ erreicht werden. Die erste Zener-Diode 27a, die eine größere Durchbruchspannung V_{Z1} aufweist, wird hierbei bei einem kleineren Temperatur-Schwellwert T₁ von einem ersten Schaltzustand, bei dem die Zener-Diode 27a nicht sperrt, in einen zweiten Schaltzustand umgeschaltet, bei dem die Zener-Diode 27a den Stromfluss sperrt. Entsprechend schaltet die zweite Zener-Diode 27b erst bei einem höheren Temperatur-Schwellwert T₂ > T₁ vom ersten in den zweiten Schaltzustand und sperrt den Stromfluss zu der zugehörigen zweiten LED 29b.

Die als erstes Schaltelement dienende erste Zener-Diode 27a kann somit dazu dienen, den Bediener darüber zu informieren, dass die Temperatur an dem Detektor 21 ungewöhnlich hoch ist und beispielsweise einen Temperatur-Schwellwert T₁ von 35°C überschritten hat. Steigt die Temperatur des Detektors 21 weiter an und überschreitet den zweiten Temperatur-Schwellwert T₂, der beispielsweise bei 50°C liegen kann, sperrt die zweite Zener-Diode 27b und die zweite LED 29b leuchtet nicht mehr, was einem Bediener anzeigt, dass die Laserstrahl-Erzeugungseinrichtung 2 abgeschaltet oder die Ausrichtung des Laserstrahls 5 geeignet korrigiert werden sollte.

Es versteht sich, dass beim Überschreiten des zweiten Temperatur-Schwellwerts T₂ alternativ oder zusätzlich zu einer optischen Anzeige auch eine akustische Anzeige erfolgen kann. Alternativ oder zusätzlich kann insbesondere die Einrichtung 20 bzw. die Temperaturüberwachungseinrichtung 23 ausgebildet sein, ein Signal an die Laserstrahl-Erzeugungseinrichtung 2 zu übermitteln, um den Laserstrahl 5 abzuschalten und auf diese Weise den Detektor 21 sowie weitere im Bereich des Strahlengangs des Laserstrahls 5 angeordnete Bauelemente vor einer Beschädigung zu schützen. Durch die Reihenschaltung der Temperatursensoren 24a-d mit den Schaltelementen 27a, 27b wird auch bei einer Unterbrechung, beispielsweise beim Durchbrennen einer der Temperatursensoren 24a-d, der Schaltkreis der Temperaturüberwachungseinrichtung 23 geöffnet, so dass auch dieser Fehlerfall erkannt werden kann.

Um die Temperatur-Schwellwerte T₁, T₂ einzustellen, bei denen die als Schaltelemente 27a, 27b dienenden Zener-Dioden vom ersten in den zweiten Schaltzustand umschalten, ist in der Temperaturüberwachungseinrichtung 23 eine einstellbare Einrichtung in Form eines Potentiometers 28 angeordnet, dessen Widerstand und somit die an diesem abfallende Spannung V_{P} von einem Bediener eingestellt werden kann. Da sich die Spannung, die an den Zener-Dioden 27a, 27b abfällt, um den Betrag der Spannung V_{P} reduziert, die an dem Potentiometer 28 abfällt, können durch die Einstellung der Spannung V_{P} die Temperatur-Schwellwerte T₁, T₂ eingestellt werden, bei denen die Schaltelemente 27a, 27b von ersten in den zweiten Schaltzustand umschalten. Die Zuordnung zwischen der an dem Potentiometer 28 einzustellenden Spannung V_{P} zu einem jeweiligen Temperatur-Schwellwert T₁, T₂ kann anhand der temperaturabhängigen Kennlinien der als PTC-Widerstände ausgebildeten Temperatursensoren 24a-d erfolgen. Sofern die beiden Temperatur-Schwellwerte T₁, T₂ unabhängig voneinander eingestellt werden sollen, können zwei Potentiometer verwendet werden, die in einem jeweiligen Zweig einer Zener-Diode 27a, 27b angeordnet sind.

Für die Ausbildung des Detektors 21 bestehen mehrere Möglichkeiten, von denen in **Fig. 3** beispielhaft eine dargestellt ist, bei welcher der Detektor 21 einen Grundkörper 31 mit einer ringförmigen Innengeometrie aufweist, welche die in der Draufsicht auf den Detektor 21 kreisförmige Öffnung 22 umschließt. Der Grundkörper 31 besteht aus einem Material mit einer hohen Wärmeleitfähigkeit. Geeignete Materialien für den Grundkörper 31 sind insbesondere Metalle, beispielsweise Kupfer. In den Grundkörper 31 sind die Temperatursensoren 24a, 24b integriert, die im gezeigten Beispiel in Hohlräumen in Form von Bohrungen angebracht sind und flächig an dem Grundkörper 31 anliegen oder mittels einer Wärmeleitpaste oder einem Wärmeleitkleber eingebettet werden, um eine gute Wärmeübertragung herzustellen. In einem dem einfallenden Laserstrahl 5 zugewandten Bereich des Grundkörpers 31 ist ein ebenfalls ringförmiger Absorber 32 aus einem Absorbermaterial angebracht. Bei dem Absorbermaterial handelt es sich im gezeigten Beispiel um hart anodisiertes Aluminium. Durch die harte Schicht wird das darunterliegende Aluminium auch noch vor dem Aufschmelzen "abgestützt", so dass Spitzen im Absorbermaterial länger erhalten bleiben. Auch erhöht sich durch die harte Anodisierung die Absorption. In dem Absorber 32 sind Vertiefungen eingebracht, deren radialer Querschnitt jeweils die Form eines spitzwinkligen Dreiecks aufweist, um eine gute Absorption der Laserstrahlung 5 zu erreichen. Es versteht sich, dass auch andere als die hier beschriebenen Materialien für den Grundkörper 31 bzw. für den Absorber 32 verwendet werden können.

Der Grundkörper 31 steht mit einem Kühlkörper 33 aus Aluminium über eine ebenfalls ringförmige, als Steg ausgebildete Wärmebrücke 34 in Verbindung. Ansonsten ist der Kühlkörper 33 von dem Grundkörper 31 durch einen Spalt getrennt und somit thermisch isoliert. Über die in der Nähe des Umfangs der Öffnung 22 angebrachte Wärmebrücke 34 wird die vergleichsweise geringe Wärmelast abgeführt, die bei korrekt ausgerichtetem Laserstrahl 5 durch die Laserstrahlung im Randbereich des Laserstrahls 5 erzeugt wird, die von dem als Blende wirkenden Detektor 21 abgeschnitten wird.

Bei einer fehlerhaften Ausrichtung des Laserstrahls 5 steigt die Wärmelast auf dem Grundkörper 31 stark an, so dass diese nicht mehr ausreichend über die Wärmebrücke 34 abgeführt werden kann und zu einer Erwärmung des Grundkörpers 31 und somit auch der in diesen integrierten Temperatursensoren 24a-d führt. Die Temperatursensoren 24a-d können ggf. auch an der Außenseite des Grundkörpers 31 angebracht sein, sofern eine flächige Anlage und somit eine gute Wärmeübertragung gegeben ist.

In dem plattenförmigen Kühlkörper 35 ist ein Kühlkanal 35 zum Durchfluss eines Kühlmediums, beispielsweise von Kühlwasser, angebracht. Der in Strahlrichtung des Laserstrahls 5 vor dem Kühlkörper 33 angeordnete Grundkörper 31 nimmt die auftreffende Laserstrahlung auf und verhindert ein Durchschmelzen des Detektors 21 bis zum Kühlkanal 35, so dass ein Austritt des Kühlmediums in den Strahlengang des Laserstrahls 5 bzw. in die Umgebung vermieden werden kann.

Zusammenfassend können auf die oben beschriebene Weise Temperaturanstiege, die durch eine fehlerhafte Ausrichtung des Laserstrahls 5 hervorgerufen werden, schnell erkannt werden und auf diese Weise können der Detektor 21 und weitere Bauteile vor Beschädigung durch die hochenergetische Laserstrahlung geschützt werden. Der Ort, an dem der fehlerhaft ausgerichtete Laserstrahl 5 auf den Detektor 21 auftrifft, spielt aufgrund der schnellen Wärmeübertragung bzw. des hohen Wärmeleitwerts des Grundkörpers 31 und einer ausreichend großen Anzahl von Temperatursensoren 24a-d praktisch keine Rolle. An Stelle von Temperatursensoren 24a-d in Form von PTC-Widerständen können auch Temperatursensoren in Form von NTC-Widerständen oder in Form von anderen elektronischen Bauteilen verwendet werden, die einen starke Abhängigkeit des Widerstands von der Temperatur oder mindestens eine andere temperaturabhängige Eigenschaft aufweisen, die von der Temperaturüberwachungseinrichtung 23 detektiert werden kann. Die Einrichtung 20 kann selbstverständlich auch in anderen optischen Einrichtungen bzw. Anlagen verwendet werden, bei denen ein hochenergetischer Laserstrahl verwendet wird, beispielsweise in einer Laserbearbeitungsmaschine oder dergleichen.

## Patentansprüche

1. Einrichtung (20) zur Überwachung der Ausrichtung eines Laserstrahls (5), umfassend:
einen Detektor (21) mit einer Öffnung (22) zum Durchtritt des Laserstrahls (5), mindestens zwei Temperatursensoren (24a-d), die an dem Detektor (21) angebracht sind, sowie
eine Temperaturüberwachungseinrichtung (23), die mit den mindestens zwei Temperartursensoren (24a-d) verbunden ist, um die Ausrichtung des Laserstrahls (5) relativ zu der Öffnung (22) zu überwachen,
wobei die mindestens zwei Temperatursensoren (24a-d) entweder einen mit zunehmender Temperatur zunehmenden oder einen mit zunehmender Temperatur abnehmenden temperaturabhängigen Widerstand aufweisen,
**dadurch gekennzeichnet,**
**dass** die mindestens zwei Temperatursensoren (24a-d) mit der Temperaturüberwachungseinrichtung (23) in einer Reihenschaltung verbunden sind.

2. Einrichtung nach Anspruch 1, bei der die Temperatursensoren (24a-d) als PTC-Widerstände ausgebildet sind.

3. Einrichtung nach Anspruch 1 oder 2, bei welcher der Detektor (21) einen die Öffnung (22) ringförmig umschließenden Grundkörper (31) aufweist, in den die Temperatursensoren (24a-d) integriert sind.

4. Einrichtung nach Anspruch 3, bei welcher der Grundkörper (31) aus Metall, insbesondere aus Kupfer, gebildet ist.

5. Einrichtung nach einem der Ansprüche 3 oder 4, bei welcher an dem Grundkörper (31) ein Absorber (32) angebracht ist.

6. Einrichtung nach einem der Ansprüche 3 bis 5, bei welcher der Detektor (21) einen Kühlkörper (33) aufweist, der mit dem Grundkörper (31) über eine Wärmebrücke (34) in Verbindung steht.

7. Einrichtung nach Anspruch 6, bei welcher der Kühlkörper (33) mindestens einen Kühlkanal (35) für den Durchfluss eines Kühlmediums aufweist.

8. Einrichtung nach einem der vorhergehenden Ansprüche, bei welcher die Temperatursensoren (24a-c) gleichmäßig über den Umfang (25) der Öffnung (22) verteilt sind.

9. Einrichtung nach einem der vorhergehenden Ansprüche, bei welcher die Temperaturüberwachungseinrichtung (23) mindestens ein Schaltelement (27a, 27b) aufweist, welches ausgebildet ist, beim Überschreiten einer Schaltschwelle (V_{Z1}, V_{Z2}), die einem Temperatur-Schwellwert (T₁, T₂) zugeordnet ist, von einem ersten in einen zweiten Schaltzustand umzuschalten.

10. Einrichtung nach Anspruch 9, bei welcher die Temperaturüberwachungseinrichtung (23) ein erstes Schaltelement (27a) und ein zweites Schaltelement (27b) aufweist, die ausgebildet sind, beim Überschreiten von Schaltschwellen (V_{Z1}, V_{Z2}), die unterschiedlichen Temperatur-Schwellwerten (T₁, T₂) zugeordnet sind, von einem ersten in einen zweiten Schaltzustand umzuschalten.

11. Einrichtung nach Anspruch 9 oder 10, bei welcher das mindestens eine Schaltelement als Zener-Diode (27a, 27b) ausgebildet ist.

12. Einrichtung nach einem der Ansprüche 9 bis 11, bei welcher die Temperaturüberwachungseinrichtung (23) eine Einrichtung (28) zur Einstellung des mindestens einen Temperatur-Schwellwerts (T₁ T₂) umfasst, welcher der mindestens einen Schaltschwelle (V_{Z1}, V_{Z2}) zugeordnet ist.

13. Einrichtung nach einem der Ansprüche 9 bis 12, bei welcher die mindestens eine Schalteinrichtung (27a, 27b) zu den Temperatursensoren (24a-d) in Reihe geschaltet ist.

14. EUV-Strahlungserzeugungsvorrichtung (1), umfassend:
eine Vakuum-Kammer (4) mit einer Vakuum-Umgebung (4a), in der zur Erzeugung von EUV-Strahlung (14) ein Target-Material (13) in einem Zielbereich (B) anordenbar ist, eine Strahlführungseinrichtung (18) zur Führung eines Laserstrahls (5) in den Zielbereich (B), sowie
mindestens eine Einrichtung (20) nach einem der vorhergehenden Ansprüche zur Überwachung der Ausrichtung des von der Strahlführungseinrichtung (18) geführten Laserstrahls (5).

15. EUV-Strahlungserzeugungsvorrichtung nach Anspruch 14, weiter umfassend:
eine Laserstrahl-Erzeugungseinrichtung (2) zur Erzeugung des Laserstrahls (5), wobei die Einrichtung (20) ausgebildet ist, die Laserstrahl-Erzeugungseinrichtung (2) beim Überschreiten eines Temperatur-Schwellwerts (T₂) abzuschalten.

## Claims

1. Device (20) for monitoring the alignment of a laser beam (5), comprising:
a detector (21) having an opening (22) for passage of the laser beam (5), at least two temperature sensors (24a-d) which are mounted on the detector (21), and
a temperature monitoring device (23) which is connected to the at least two temperature sensors (24a-d), for monitoring the alignment of the laser beam (5) relative to the opening (22),
wherein the at least two temperature sensors (24a-d) have a temperature-dependent resistance which either increases as the temperature increases or decreases as the temperature increases,
**characterized**
**in that** the at least two temperature sensors (24a-d) are connected in series with the temperature monitoring device (23).

2. Device according to claim 1, wherein the temperature sensors (24a-d) are in the form of PTC resistors.

3. Device according to claim 1 or 2, wherein the detector (21) has a base body (31) which surrounds the opening (22) annularly and into which the temperature sensors (24a-d) are integrated.

4. Device according to claim 3, wherein the base body (31) is formed of metal, in particular of copper.

5. Device according to either claim 3 or claim 4, wherein an absorber (32) is mounted on the base body (31).

6. Device according to any one of claims 3 to 5, wherein the detector (21) has a cooling body (33) which is connected to the base body (31) via a thermal bridge (34).

7. Device according to claim 6, wherein the cooling body (33) has at least one cooling channel (35) through which there flows a cooling medium.

8. Device according to any one of the preceding claims, wherein the temperature sensors (24a-c) are distributed evenly over the periphery (25) of the opening (22).

9. Device according to any one of the preceding claims, wherein the temperature monitoring device (23) has at least one switching element (27a, 27b) which is designed to switch from a first switching state into a second switching state when a switching threshold (V_{Z1}, V_{Z2}), which is assigned to a temperature threshold value (T₁, T₂), is exceeded.

10. Device according to claim 9, wherein the temperature monitoring device (23) has a first switching element (27a) and a second switching element (27b) which are designed to switch from a first switching state into a second switching state when switching thresholds (V_{Z1}, V_{Z2}), which are assigned to different temperature threshold values (T₁, T₂), are exceeded.

11. Device according to claim 9 or 10, wherein the at least one switching element is in the form of a Zener diode (27a, 27b).

12. Device according to any one of claims 9 to 11, wherein the temperature monitoring device (23) comprises a device (28) for adjusting the at least one temperature threshold value (T_{1,} T₂) which is assigned to the at least one switching threshold (V_{Z1,} V_{Z2}).

13. Device according to any one of claims 9 to 12, wherein the at least one switching device (27a, 27b) is connected in series with the temperature sensors (24a-d).

14. EUV radiation generating apparatus (1), comprising:
a vacuum chamber (4) having a vacuum environment (4a) in which a target material (13) can be arranged in a target region (B) for generating EUV radiation (14), a beam guiding device (18) for guiding a laser beam (5) into the target region (B), and
at least one device (20) according to any one of the preceding claims for monitoring the alignment of the laser beam (5) guided by the beam guiding device (18).

15. EUV radiation generating apparatus according to claim 14, further comprising:
a laser beam generating device (2) for generating the laser beam (5), wherein the device (20) is designed to switch off the laser beam generating device (2) when a temperature threshold value (T₂) is exceeded.

## Revendications

1. Dispositif (20) affecté à la surveillance de l'orientation d'un faisceau laser (5), comprenant :
un détecteur (21) muni d'un orifice (22) dévolu au passage dudit faisceau laser (5),
au moins deux capteurs de température (24a-d) implantés sur ledit détecteur (21),
ainsi qu'un dispositif (23) de surveillance de la température, raccordé aux deux capteurs de température (24a-d) à présence minimale, afin de surveiller l'orientation dudit faisceau laser (5) par rapport audit orifice (22),
sachant que les deux capteurs de température (24a-d), à présence minimale, ont une résistance tributaire de la température qui augmente lorsque la température croît, ou qui diminue lorsque ladite température croît,
**caractérisé par le fait**
**que** les deux capteurs de température (24a-d), à présence minimale, sont raccordés au dispositif (23) de surveillance de la température dans un branchement en série.

2. Dispositif selon la revendication 1, dans lequel les capteurs de température (24a-d) sont réalisés sous la forme de résistances PTC.

3. Dispositif selon la revendication 1 ou 2, dans lequel le détecteur (21) est pourvu d'un corps de base (31) qui ceinture annulairement l'orifice (22) et dans lequel les capteurs de température (24a-d) sont intégrés.

4. Dispositif selon la revendication 3, dans lequel le corps de base (31) consiste en un métal, notamment en du cuivre.

5. Dispositif selon l'une des revendications 3 ou 4, dans lequel un absorbeur (32) est implanté sur le corps de base (31).

6. Dispositif selon l'une des revendications 3 à 5, dans lequel le détecteur (21) est doté d'un corps de refroidissement (33) en liaison avec le corps de base (31) par l'intermédiaire d'un pont thermique (34).

7. Dispositif selon la revendication 6, dans lequel le corps de refroidissement (33) présente au moins un canal de refroidissement (35) dévolu à la circulation d'un fluide de refroidissement.

8. Dispositif selon l'une des revendications précédentes, dans lequel les capteurs de température (24a-d) sont uniformément répartis sur le pourtour (25) de l'orifice (22).

9. Dispositif selon l'une des revendications précédentes, dans lequel le dispositif (23) de surveillance de la température est muni d'au moins un élément de commutation (27a, 27b), conçu pour passer d'un premier à un second état de commutation lors du dépassement d'un seuil de commutation (V_{Z1}, V_{Z2}) associé à une valeur de seuil (T₁, T₂) de la température.

10. Dispositif selon la revendication 9, dans lequel le dispositif (23) de surveillance de la température est muni d'un premier élément de commutation (27a) et d'un second élément de commutation (27b), conçus pour passer d'un premier à un second état de commutation lors du dépassement de seuils de commutation (V_{Z1}, V_{Z2}) associés à différentes valeurs de seuil (T₁, T₂) de la température.

11. Dispositif selon la revendication 9 ou 10, dans lequel l'élément de commutation, à présence minimale, est réalisé sous la forme d'une diode Zener (27a, 27b).

12. Dispositif selon l'une des revendications 9 à 11, dans lequel le dispositif (23) de surveillance de la température inclut un dispositif (28) affecté au réglage de la valeur de seuil (T₁, T₂) de la température, à présence minimale, associée au seuil de commutation (V_{Z1}, V_{Z2}) à présence minimale.

13. Dispositif selon l'une des revendications 9 à 12, dans lequel le dispositif de commutation (27a, 27b), à présence minimale, est branché en série avec les capteurs de température (24a-d).

14. Dispositif (1) générateur de rayonnement EUV, comprenant :
une chambre à vide (4) munie d'un environnement sous vide (4a) dans lequel un matériau cible (13) peut être disposé dans une zone cible (B), en vue d'engendrer un rayonnement EUV (14) ; un dispositif de guidage (18), conçu pour guider un faisceau laser (5) jusque dans ladite zone cible (B) ;
ainsi qu'au moins un dispositif (20) conforme à l'une des revendications précédentes, affecté à la surveillance de l'orientation dudit faisceau laser (5) guidé par ledit dispositif de guidage (18).

15. Dispositif générateur de rayonnement EUV, selon la revendication 14, comprenant par ailleurs :
un dispositif générateur (2) conçu pour engendrer le faisceau laser (5), le dispositif (20) étant réalisé pour désactiver ledit dispositif (2), générateur du faisceau laser, lors du dépassement d'une valeur de seuil (T₂) de la température.
